# EUROPÄISCHE PATENTSCHRIFT

(11) **EP 1 972 674 B1**
(45) Veröffentlichungstag und Bekanntmachung des Hinweises auf die Patenterteilung: **20.10.2010**
(21) Anmeldenummer: 07005738.5
(22) Anmeldetag: 21.03.2007
(51) Int. Cl.: C09J 7/02, G09F 3/02

(54) **Sicherheitsfolie mit Manipulationsnachweis**
Safety film with manipulation verification
Feuilles de sécurité avec vérification de la manipulation

(43) Veröffentlichungstag der Anmeldung: 24.09.2008
(73) Patentinhaber: HUECK Folien Ges.m.b.H., 4342 Baumgartenberg (AT)
(72) Erfinder: Hilburger, Johann, 92712 Pirk (DE)
(74) Vertreter: Landgraf, Elvira

(56) Entgegenhaltungen:
- EP-A2- 0 398 635
- EP-A2- 1 113 059
- US-A- 5 770 283

## Beschreibung

Die Erfindung betrifft ein Sicherheitsetikett oder- klebeband mit Manipulationsnachweis, bei dem bei Ablösen des Etiketts vom zu sichernden Gegenstand oder der zu sichernden Verpackung ein verborgenes optisches Element sichtbar wird.

Aus der DE 100 22 002 A1 ist ein Sicherheitsklebeband zum Nachweis des unbefugten Öffnens einer Verpackung bekannt. Das mehrschichtige Klebeband weist einen Träger auf Basis einer gereckten Thermoplastfolie auf, dessen obere Seite gegebenenfalls mit einer Trennlackierung beschichtet ist und auf dessen unterer Seite folgende Schichten aufgebracht sind:
a) eine nicht vollflächig aufgetragene Primerschicht, wobei die Primerschicht sehr gut auf der Thermoplastfolie verankert ist,
b) eine vollflächig über die aufgetragene Primerschicht und die freie Thermoplastfolienoberfläche aufgetragene Trennschicht, wobei die Trennschicht besser auf der Primerschicht verankert als auf der Thermoplastfolie und
c) eine vollflächig auf die Trennschicht aufgetragene Haftklebemasse, die auf der Trennschicht besser verankert ist als die Trennschicht auf der Thermoplastfolie.
Dabei wird eine Primerschicht aufgebracht und anschließend eine Schicht, die keine Haftung zur Trägerfolie aufweist.

Nachteil dieses Aufbaus ist, dass das abgezogene Klebeband immer noch klebrig ist, da die Klebeschicht nach Abzug außen liegt.

Aufgabe der Erfindung war es ein Sicherheitsetikett oder- klebeband mit Manipulationsnachweis bereitzustellen, bei dem bei Ablösen des Etiketts ein verborgenes optisches Element sichtbar wird, das auch auf wenig spaltfesten Materialien, wie Papier oder Pappe einwandfrei funktionsfähig ist.

Gegenstand der Erfindung ist daher ein Folie gemäß Anspruch 1.

Als Trägersubstrat (1) kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, Fluorpolymere, wie Teflon und dergleichen in Frage. Die Trägerfolien weisen vorzugsweise eine Dicke von 5 - 700 µm, bevorzugt 5 - 200 µm, besonders bevorzugt 5 -100 µm auf.

Die erste Trennlackbeschichtung (2) wird in Form von Buchstaben, Zeichen, Symbolen, Linien, Guillochen, Zahlen oder Schriftzügen aufgebracht.

Als erster Trennlack (2) kommen insbesondere bekannte, schlecht haftende Lackzusammensetzungen, beispielsweise auf Basis von Cylcloolefincopolymeren, Nitrocellulose, Acrylaten, Polyvinylchlorid, Ethylenacrylatcopolymeren oder Styrolacrylaten in einem geeigneten Lösungsmittel in Frage. Zur Einstellung der Haftung werden dabei vorzugsweise chlorierte Polyolefine zugesetzt. Der Anteil der chlorierten Polyolefine in der Zusammensetzung kann 20 bis 130 Gew% im Verhältnis zum Basispolymer betragen.
Ferner können auch sehr dünn aufgetragene Polyamid-, Polyethylen-, Fluorpolymerwachsschichten oder Silikonbeschichtungen als Releaseschicht verwendet werden.

Jeder Trennlack (2, 4) kann ebenfalls mit Sicherheitspigmenten wie Fluoreszenzpigmenten und dergleichen versehen sein.
Anschließend ist auf das Trägersubstrat (1) eine vollflächige färbige oder transparente Beschichtung oder Metallisierung (3) aufgebracht.

Die optischen Eigenschaften der Schicht (3), insbesondere die Farben lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind in allen möglichen Kombinationen einsetzbar. Zusätzlich können auch phosphoreszierende Pigmente allein oder in Kombination mit anderen Farbstoffen und/oder Pigmenten eingesetzt werden.
Als Pigmente können alle bekannten Pigmente, beispielsweise Pigmente auf anorganischer Basis, wie Titandioxid, Zinksulfid, Kaolin, ITO, ATO, FTO, Aluminium, Chrom- und Siliciumoxide, oder Pigmente auf organischer Basis, wie Phthalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werden. Als Farbstoffe kommen beispielsweise 1,1- oder 1,2- Chrom-Cobalt-Komplexe in Frage.
Diese Schicht kann aber auch einen definierten Farbverlauf aufweisen.

Die Aufbringung der farbigen Schicht (3) kann durch ein beliebiges Verfahren, beispielsweise durch Tiefdruck, Flexodruck, Siebdruck, Digitaldruck und dergleichen erfolgen.

Eine metallische Schicht (3) kann aus einem Metall, einer Metallverbindung, oder einer Legierung bestehen. Als Metallschicht sind Schichten aus Al, Cu, Fe, Ag, Au, Cr, Ni, Zn und dergleichen geeignet. Als Metallverbindungen sind beispielsweise Oxide oder Sulfide von Metallen, insbesondere TiO₂, Cr-Oxide, ZnS, ITO, ATO, FTO, ZnO, Al₂O₃ oder Siliciumoxide geeignet. Geeignete Legierungen sind beispielsweise Cu-Al Legierungen, Cu-Zn Legierungen und dergleichen.

Die metallische Schicht (3) kann durch einen PVD- oder CVD- Prozess (Sputtern, Bedampfen), durch Galvanisieren, aber auch durch jedes bekannte Druckverfahren, beispielsweise durch Tiefdruck, Flexodruck, Siebdruck, Digitaldruck aufgebracht werden.

Anschließend ist eine vollflächige transparente oder färbige zweite Trennlackschicht (4) aufgebracht.
Als zweiter Trennlack (4) können insbesondere bekannte schlecht haftende Lackzusammensetzungen, beispielsweise auf Basis von Cylcloolefincopolymeren, Nitrocellulose, Acrylaten, Polyvinylchlorid, Ethylenacrylatcopolymeren oder Styrolacrylaten in einem geeigneten Lösungsmittel in Frage. Zur Einstellung der Haftung werden dabei vorzugsweise chlorierte Polyolefine zugesetzt. Der Anteil der chlorierten Polyolefine in der Zusammensetzung kann 20 bis 130 Gew% im Verhältnis zum Basispolymer betragen.
Ferner können auch sehr dünn aufgetragene Polyamid-, Polyethylen-, Fluorpolymerwachsschichten oder Silikonbeschichtungen zur Anwendung kommen.

Die zweite Trennlackbeschichtung (4) weist bessere Haftung zur Folie als die erste Trennlackbeschichtung (2) zum Trägersubstrat (1) auf.

Als Pigmente zur Erzeugung eines färbigen Trennlacks (2, 4) können alle bekannten Pigmente, beispielsweise Pigmente auf anorganischer Basis, wie Titandioxid, Zinksulfid, Kaolin, !TO, ATO, FTO, Aluminium, Chrom- und Siliciumoxide, oder Pigmente auf organischer Basis, wie Phthalocyaninblau, i-Indolidingelb, Dioxazinviolett und dergleichen als auch farbige und/oder verkapselte Pigmente in chemisch, physikalisch oder reaktiv trocknenden Bindemittelsystemen verwendet werden. Als Farbstoffe kommen beispielsweise 1,1- oder 1,2-Chrom-Cobalt-Komplexe, gegebenenfalls auch bekannte fluoreszierende Farbstoffe oder Pigmente in Frage.

Anschließend ist eine Selbstklebebeschichtung (5) aufgebracht. Mit Hilfe der Selbstklebebeschichtung (5) wird das Sicherheitsetikett oder- klebeband auf den zu sichernden Gegenstand oder auf die zu sichernde Verpackung aufgebracht.

Nach Abziehen des Sicherheitsetiketts (Auslösen des Manipulationsnachweises) sind beide Seiten nicht mehr klebrig, die Selbstklebebeschichtung verbleibt vollständig am zu sichernden Objekt.

Die Selbstklebebeschichtung verbleibt dabei vollständig auf dem Substrat, auf das das Etikett oder das Klebeband aufgebracht wird.

Daher kann das erfindungsgemäße Sicherheitsetikett oder- klebeband auf jedem beliebigen Substrat verwendet werden.

Gegebenenfalls kann zwischen der vollflächigen farbigen Beschichtung (3) oder Metallisierung (3) und dem darauf aufgebrachten Trennlack (4) oder zwischen dieser Trennlackschicht (4) und der Selbstklebebeschichtung (5) eine zusätzliche sichtbare oder nur unter definierten Wellenlängen sichtbare partielle Beschichtung vorhanden sein. Diese Beschichtung kann beispielsweise unter UV- Licht oder IR- Licht sichtbar sein. Diese Beschichtungen weisen bekannte unter diesen Wellenlängen emittierende Pigmente in Frage.
Diese Beschichtung kann durch bekannte Druckverfahren oder Beschichtungsverfahren, wie beispielsweise Flexo-, Sieb-, Tief- oder Digitaldruck, Walzenauftragsverfahren und dergleichen aufgebracht werden.

Bei Ablösen des Etiketts wird die färbige oder metallische Beschichtung (3) in Form von Buchstaben, Zeichen, Symbolen, Linien, Guillochen, Zahlen oder Schriftzügen sichtbar.

Abzug ein positives (3a) und der Rückstand ein negatives Bild (3b) oder umgekehrt der Abzug ein negatives und der Rückstand ein positives Bild.

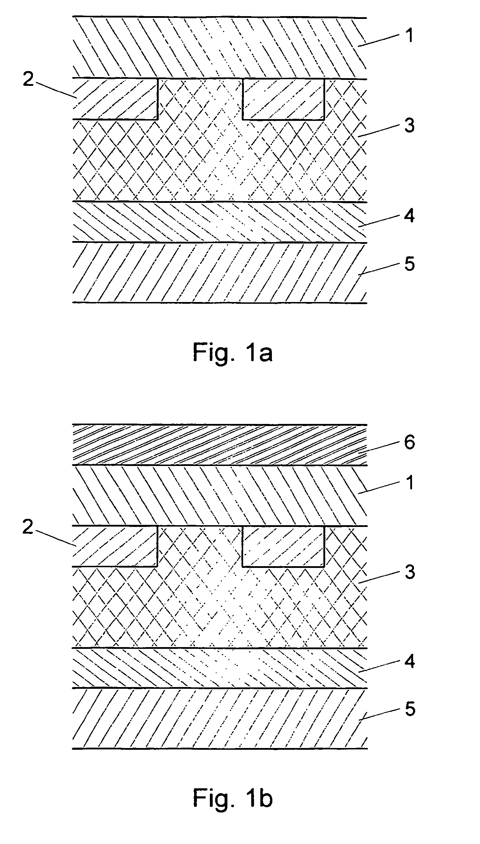

In den Fig. 1 und 1a sind erfindungsgemäßen Aufbauten eines Sicherheitsetiketts (Fig.1) oder eines Klebebandes (Fig. 1 a) dargestellt.

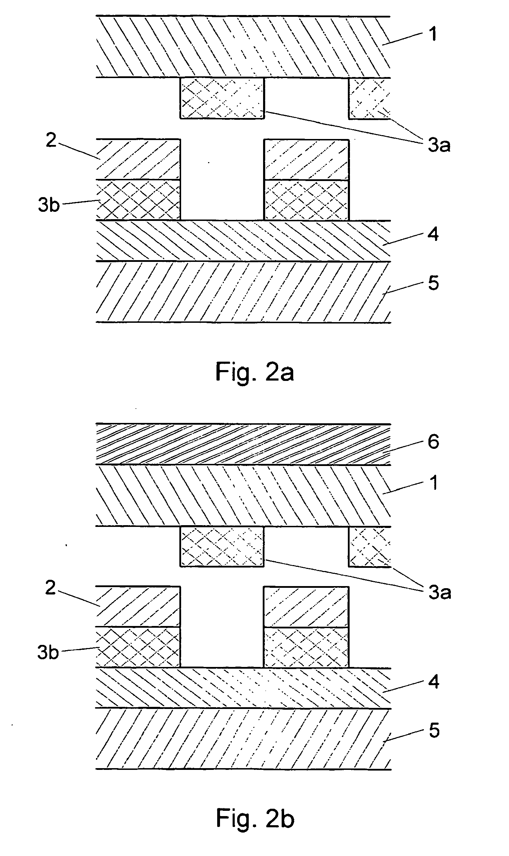

In den Fig. 2 und 2 a sind die entsprechenden Aufbauten nach versuchtem Abziehen des Etiketts (Fig.2a) bzw. des Klebebandes (Fig. 2b).

Darin bedeuten 1 das Trägersubstrat, 2 die partielle Trennlackschicht 3 die vollflächige metallische oder färbige Schicht, 4 die vollflächige die Trennlackschicht, 5 die Selbstklebebeschichtung und 6 die Trennschicht für die Verwendung als Klebeband.

Die erfindungsgemäßen Sicherheitsfolien können in konfektionierter Form als Etiketten in beliebiger Form (eckig, rund, oval) oder als Klebebänder zur Sicherung von Gegenständen oder Verpackungen verwendet werden.

## Patentansprüche

1. Sicherheitsfolie mit Manipulationsnachweis bestehend aus einem flexible Trägersubstrat auf Basis einer flexiblen Kunststofffolie, **dadurch gekennzeichnet, dass** auf das Trägersubstrat (1) Schichten in folgender Reihenfolge aufgebracht sind:
a. partiell ein Trennlack (2) in Form von Buchstaben, Zeichen, Symbolen, Linien, Guillochen, Zahlen oder Schriftzügen,
b. anschließend eine vollflächige farbige oder transparente Beschichtung oder Metallisierung (3) und
c. auf diese vollflächige Schicht eine vollflächige transparente oder färbige Trennschicht (4) und
d. eine Selbstklebebeschichtung (5) aufgebracht ist,
wobei die Schichten a) (2) und c) (4) aus einem Lack auf Basis von Cycloolefincopolymeren, Nitrocellulose, Acrylaten, Polyvinylchlorid, Ethylenacrylatcopolymeren oder Styrolacrylaten in einem Lösungsmittel oder
aus Polyamid-, Polyethylen-, Fluorpolymerwachsschichten oder Sitikonbeschichtungen bestehen und die Schicht d) (5) ach Abziehen der Sicherheitsfolie (Auslösen des Manipulationsnachweises) zumindest von der Schicht c) 4 edeckt bleit, wobei bei Ablösen des Etiketts die farbige oder metallische Schicht 3 in Form von Buchstaben, Zeichen, Symbolen, Linien, Guillochen, Zahlen oder Schriftzügen sichtbar wird und der Abzug ein positives und der Rückstand ein negatives Bild oder umgekehrt der Abzug ein negatives und der Rückstand ein positives Bild darstellt.

2. Sicherheitsfolie nach Anspruch 1, **dadurch gekennzeichnet, dass** dem Lack auf Basis von Cycloolefincopolymeren, Nitrocellulose, Acrylaten, Polyvinylchlorid, Ethylenacrylatcopolymeren oder Styrolacrylaten in einem Lösungsmittel zur Einstellung der Haftung chlorierte Polyolefine im Verhältnis von 20 bis 130 Gew% zum Basispolymer zugesetzt sind.

3. Sicherheitsfolie nach einem der Ansprüche 1 bis 2, **dadurch gekennzeichnet, dass** Schicht a) (2) und/oder Schicht c) (4) mit Sicherheitspigmenten wie Fluoreszenzpigmenten und dergleichen versehen ist.

4. Sicherheitsfolie nach einem der Ansprüche 1 bis 3, **dadurch gekennzeichnet, dass** die Schicht b) (3) eine pigmentierte Farbschicht ist.

5. Sicherheitsfolie nach Anspruch 4, **dadurch gekennzeichnet, dass** die Farbschicht b) (3) mit lumineszierenden, im UV- oder IR-Bereich fluoreszierenden bzw. phosphoreszierenden, wärmeempfindlichen Pigmenten oder Effektpigmenten versehen ist.

6. Sicherheitsfolie nach einem der Ansprüche 1 bis 3, **dadurch gekennzeichnet, dass** die Schicht b) (3) aus einem Metall, einer Metallverbindung oder einer Legierung besteht.

7. Sicherheitsfolie nach Anspruch 6, **dadurch gekennzeichnet, dass** die metallische Schicht b) (3) durch einen PVD- oder CVD-Prozess, durch Galvanisieren oder ein Druckverfahren aufgebracht ist.

8. Sicherheitsfolie nach einem der Ansprüche 1 bis 7, **dadurch gekennzeichnet, dass** die Schicht c) (4) farbige Pigmente oder Farbstoffe enthält.

9. Sicherheitsfolie nach einem der Ansprüche 1 bis 8, **dadurch gekennzeichnet, dass** auf der anderen Seite des Trägersubstrats (1) eine weitere vollflächige Trennschicht (6) aufgebracht ist.

10. Verwendung der Sicherheitsfolie nach einem der Ansprüche 1 bis 9 als Sicherheitsetikett oder Sicherheitsklebeband.

## Claims

1. Tamper-detecting security film composed of a flexible supportive substrate based on a flexible plastics film, **characterized in that** layers have been applied in the following sequence to the supportive substrate (1):
a. partially a separator-coating material (2) in the form of letters, signs, symbols, lines, guilloche effects, numerals or writing,
b. a full-surface coloured or transparent coating or metallization (3) and
c. onto the said full-surface layer, a full-surface transparent or coloured separator layer (4) and
d. a self-adhesive coating (5) has been applied,
where the layers a) (2) and c (4) are composed of a coating material based on cycloolefin copolymers, on nitrocellulose, on acrylates, on polyvinyl chloride, on ethylene-acrylate copolymers or on styrene acrylates in a solvent or are composed of polyamide layers, of polyethylene layers, of fluoropolymer-wax layers or of silicone coatings and, after the security film has been peeled away (the tamper-detection has been triggered) the layer d) (5) continues to be at least covered by the layer c) (4), where, on peeling of the label, the coloured or metallic layer (3) in the form of letters, signs, symbols, lines, guilloche effects, numerals or writing becomes visible and the peeled-away portion reveals a positive image and the residue reveals a negative image, or conversely the peeled-away portion reveals a negative image and the residue reveals a positive image.

2. Security film according to Claim 1, **characterized in that**, in order to set the level of adhesion, chlorinated polyolefins have been added in a ratio of from 20 to 130% by weight to the base polymer in the coating material based on cycloolefin copolymers, on nitrocellulose, on acrylates, on polyvinyl chloride, on ethylene-acrylate copolymers or on styrene acrylates in a solvent.

3. Security film according to any of Claims 1 to 2, **characterized in that** layer a) (2) and/or layer c) (4) has been provided with security pigments, such as fluorescent pigments and the like.

4. Security film according to any of Claims 1 to 3, **characterized in that** the layer b) (3) is a pigmented colour layer.

5. Security film according to Claim 4, **characterized in that** the colour layer b) (3) has been provided with luminescent pigments fluorescing or phosphorescing in the UV range or IR range, or with heat-sensitive pigments or with special-effect pigments.

6. Security film according to any of Claims 1 to 3, **characterized in that** the layer b) (3) is composed of a metal, of a metal compound or of an alloy.

7. Security film according to Claim 6, **characterized in that** the metallic layer b) (3) has been applied via a PVD or CVD process, via electroplating or via a printing process.

8. Security film according to any of Claims 1 to 7, **characterized in that** the layer c) (4) comprises coloured pigments or dyes.

9. Security film according to any of Claims 1 to 8, **characterized in that** a further full-surface separator layer (6) has been applied on the other side of the supportive substrate (1).

10. Use of the security film according to any of Claims 1 to 9 as security label or security adhesive tape.

## Revendications

1. Feuille de sécurité avec vérification de la manipulation, constituée d'un substrat porteur plat à base d'une feuille de plastique flexible, **caractérisée en ce que** des couches sont appliquées sur le substrat porteur (1) dans l'ordre suivant :
a. partiellement, une laque de séparation (2) sous la forme de lettres, de signes, de symboles, de lignes, de guillochés, de chiffres ou de graphismes,
b. ensuite, un revêtement coloré sur toute la surface ou transparent ou une métallisation (3) et
c. sur cette couche sur toute la surface, une couche de séparation (4) transparente ou colorée sur toute la surface, et
d. un revêtement autocollant (5) est appliqué, les couches a) (2) et (4) consistant en une laque
à base de copolymères de cyclo-oléfine, de nitrocellulose, d'acrylates, de chlorure de polyvinyle, de copolymères d'acrylate d'éthylène ou d'acrylate de styrène dans un solvant ou des couches de polyamide, polyéthylène, de cire de fluoropolymère ou des revêtements de silicone et la couche d) (5) reste recouverte, après le retrait de la feuille de sécurité (déclenchement de la vérification de la manipulation) au moins de la couche c) (4), lors du retrait de l'étiquette, la couche colorée ou métallique 3 sous forme de lettres, de signes, de symboles, de lignes, de guillochés, de chiffres ou de graphismes apparaissant et le tirage donnant une image positive et le reste, une image négative ou inversement, le tirage donnant une image négative et le reste, une image positive.

2. Feuille de sécurité selon la revendication 1, **caractérisée en ce que** l'on ajoute à la laque à base de copolymères de cyclo-oléfine, de nitrocellulose, d'acrylates, de chlorure de polyvinyle, de copolymères d'acrylate d'éthylène ou d'acrylate de styrène dans un solvant, des polyoléfines chlorées pour ajuster l'adhérence, en un rapport de 20 à 130 % en poids par rapport au polymère de base.

3. Feuille de sécurité selon l'une des revendications 1 à 2, **caractérisée en ce que** la couche a) (2) et/ou la couche c) (4) sont dotées de pigments de sécurité tels que des pigments fluorescents ou similaires.

4. Feuille de sécurité selon l'une des revendications 1 à 3, **caractérisée en ce que** la couche b) (3) est une couche colorée pigmentée.

5. Feuille de sécurité selon la revendication 4, **caractérisée en ce que** la couche colorée b) (3) est dotée de pigments luminescents, fluorescents ou phosphorescents aux UV ou aux IR, thermosensibles ou de pigments à effet.

6. Feuille de sécurité selon l'une des revendications 1 à 3, **caractérisée en ce que** la couche b) (3) est constituée d'un métal, d'un composé métallique ou d'un alliage.

7. Feuille de sécurité selon la revendication 6, **caractérisée en ce que** la couche métallique b) (3) est appliquée par un processus PVD ou CVD, par galvanisation ou par un procédé d'impression.

8. Feuille de sécurité selon l'une des revendications 1 à 7, **caractérisée en ce que** la couche c) (4) contient des pigments colorés ou des colorants.

9. Feuille de sécurité selon l'une des revendications 1 à 8, **caractérisée en ce que**, sur l'autre côté du substrat porteur (1) est appliquée une couche de séparation (6) sur toute la surface.

10. Utilisation de la feuille de sécurité selon l'une des revendications 1 à 9, comme étiquette de sécurité ou ruban adhésif de sécurité.
